# FASCICULE DE BREVET EUROPEEN

(11) **EP 2 373 407 B1**
(45) Date de publication et mention de la délivrance du brevet: **28.08.2013**
(21) Numéro de dépôt: 09774727.3
(22) Date de dépôt: 08.12.2009
(51) Int. Cl.: B01F 17/34

(54) **UTILISATION DE POLYMERES ACRYLIQUES NEUTRALISES PAR LE LITHIUM COMME AGENTS DISPERSANTS OU D'AIDE AU BROYAGE EN MILIEU AQUEUX DE MATIERES MINERALES**
VERWENDUNG VON LITHIUM ACRYLATPOLYMEREN ALS DISPERGIERMITTEL ODER MAHLHILFSMITTEL IN WÄSSERIGEN MEDIEN VON MINERALSTOFFEN
USE OF LITHIUM NEUTRALIZED ACRYLIQUE POLYMERS AS DISPERSING AGENTS OR GRINDING AGENT IN AQUEOUS MEDIA OF MINERAL MATERIALS

(30) Priorité: 19.12.2008 FR 0858819
(43) Date de publication de la demande: 12.10.2011
(73) Titulaire: Coatex S.a.S, 69730 Genay (FR)
(72) Inventeur: MONGOIN, Jacques, F-69650 Quincieux (FR); JACQUEMET, Christian, F-69005 Lyon (FR)
(74) Mandataire: Fiorucci, Hélène
(86) Numéro de dépôt international: PCT/IB2009/007671
(87) Numéro de publication internationale: WO 2010/070407

(56) Documents cités:
- WO-A-01/48093
- FR-A- 2 903 618

## Description

La présente invention est relative aux agents mis en oeuvre pour disperser ou pour aider au broyage de matières minérales en milieu humide.

Elle permet à l'homme du métier de minimiser la quantité d'homopolymères et de copolymères de l'acide acrylique, communément mis en oeuvre dans ces opérations, sans pour autant altérer la stabilité et l'extrait sec des suspensions aqueuses de matières minérales ainsi fabriquées. Cette invention repose sur la mise en oeuvre du lithium comme agent de neutralisation particulier de ces polyacrylates. De manière surprenante et avantageuse, on parvient à réduire la quantité d'agent dispersant ou d'aide au broyage utilisé, tout en maintenant les propriétés précitées par rapport à celles obtenues avec les polyacrylates de l'art antérieur qui sont neutralisés différemment.

L'industrie minéralière est une grande consommatrice de produits chimiques. Ceux-ci sont utilisés dans les différentes étapes de transformation/modification/traitement que subissent les matières minérales. Ainsi, dans le cas du carbonate de calcium d'origine naturelle ou synthétique, l'homme du métier réalise de nombreuses opérations dites de "broyage" (réduction de la taille granulométrique des particules) à sec ou en milieu humide, ou de "dispersion" (mise en suspension des particules dans un liquide).

Ces deux opérations sont rendues plus aisées par la mise en oeuvre respectivement d'agents d'aide au broyage, dont le rôle est de faciliter l'action mécanique d'attrition et de fragmentation des particules, et d'agent dispersants, dont la fonction consiste à maintenir la viscosité de la suspension dans des plages acceptables au fur et à mesure qu'on y introduit les matières minérales.

L'art antérieur est particulièrement riche au sujet de tels additifs. Depuis de nombreuses années, on sait que les homopolymères de l'acide acrylique constituent des agents efficaces pour aider à la dispersion ou au broyage en milieu humide du carbonate de calcium. En guise de référence, on pourra se reporter aux documents FR 2 539 137, FR 2 683 536, FR 2 683 537, FR 2 683 538, FR 2 683 539 et FR 2 802 830, FR 2 818 165 qui illustrent de nombreuses variantes de ces homopolymères, en fonction de leur poids moléculaire et de leur neutralisation.

Pour le même type d'applications, il est également intéressant de copolymériser l'acide acrylique avec un autre monomère carboxylique, tel que par exemple l'acide méthacrylique ou l'anhydride maléique (voir à ce sujet les document EP 0850 685 et FR 2 903 618) et/ou avec un autre monomère à insaturation éthylénique mais sans fonction carboxylique, comme un ester acrylique : cette dernière variante est décrite dans les documents cités au paragraphe précédent.

Ceci étant, du point de vue de la législation et des exigences environnementaux, diminuer la quantité de polymère mis en oeuvre reste une priorité pour l'homme du métier, pour autant qu'elle s'accommode d'un niveau de performances équivalent à celui obtenu jusqu'alors. Parmi ces performances, on met particulièrement en avant la stabilité des suspensions aqueuses de matières minérales fabriquées, comme déterminée par des mesures de viscosité Brookfield™ à différents instants, et l'extrait sec final exprimé en % en poids sec de matières minérales par rapport au poids total desdites suspensions (dans la suite de la Demande, l'extrait sec sera toujours exprimé ainsi).

A cet égard, le document FR 2 894 846 enseigne la mise en oeuvre de composés fluorés avec des polyacrylates de l'art antérieur, permettant ainsi de diminuer leur dose dans des procédés de dispersion et de broyage de matières minérales. Cette solution présente cependant l'inconvénient de mettre en oeuvre, en plus d'un polyacrylate, un produit supplémentaire dont l'homme du métier doit gérer le stockage et la mise en oeuvre.

On sait également que réduire l'indice de polymolécularité des polymères acryliques, confère à ces derniers des propriétés de dispersion et de broyage améliorées. Ceci est notamment décrit dans les documents « Dispersion of calcite by poly(sodium acrylate) prepared by reversible addition-fragmentation chain transfer (RAFT) polymerization » (Polymer (2005), 46(19), pp. 8565-8572) et « Synthesis and Characterization of Poly(acrylic acid) Produced by RAFT Polymerization. Application as a Very Efficient Dispersant of CaCO3, Kaolin, and TiO2 » (Macromolecules (2003), 36(9), pp. 3066-3077).

Une méthode permettant de réduire cet indice de polymolécularité consiste, pour un polymère donné, à isoler les chaînes d'un certain poids moléculaires par des techniques de séparation, statiques ou dynamiques, en présence de solvants, tel que décrit dans le document EP 0 499 267. Un autre moyen repose sur la mise en oeuvre de la polymérisation radicalaire dite « contrôlée » (PRC). Ce terme fait référence à des techniques de synthèse basées sur l'utilisation d'agents de transfert de chaîne particuliers, comme des xanthates ou des trithiocarbonates (voir les documents EP 1 529 065 et EP 1 377 615). En réduisant l'indice de polymolécularité des polymères acryliques fabriqués, on dope leur capacité à disperser ou à broyer efficacement une matière minérale dans l'eau.

Toutefois, ces dernières solutions basées sur des techniques de séparation ou de PRC, sont parfois difficiles à mettre en oeuvre, car nécessitent des installations spécifiques dont ne disposent pas forcément toute installation industrielle. Proposer une solution simple permettant d'améliorer les performances comme agents dispersants et d'aide au broyage de matières minérales en milieu aqueux des polyacrylates de l'art antérieur, c'est-à-dire permettant d'en diminuer la quantité pour un niveau de performances équivalent, constitue à ce jour un problème non résolu.

Poursuivant ses recherches dans ce domaine, la Demanderesse est parvenue à mettre au point l'utilisation, dans un procédé de fabrication d'une suspension aqueuse de matière minérale par dispersion et/ou broyage, comme agent dispersant ou d'aide au broyage, d'un homopolymère de l'acide acrylique ou d'un copolymère de l'acide acrylique avec un monomère hydrosoluble, caractérisé en ce que :
a) les groupements carboxyliques dudit agent sont totalement ou partiellement neutralisés par l'ion lithium,
b) il présente un indice de viscosité compris entre 0,01 et 0,08.

De manière tout à fait inattendue, par rapport au même polymère acrylique de l'art antérieur neutralisé différemment, le polymère acrylique de l'invention permet de disperser et de broyer plus efficacement en milieu aqueux une matière minérale. A ce titre, on démontre que, pour un niveau de performances au moins équivalent (en terme d'extrait sec, et de stabilité de la viscosité Brookfield mesurée à 100 tours / minute), on parvient selon l'invention à réduire la quantité de polymère mis en oeuvre par rapport à l'art antérieur.

Le fait que ledit agent soit totalement ou partiellement neutralisé par le lithium signifie que tout ou partie de ses fonctions carboxyliques sont neutralisées par le lithium. Lorsque la neutralisation au lithium est partielle, le polymère résultant peut éventuellement être totalement neutralisé, les autres fonctions carboxyliques étant neutralisées par un agent différent du lithium.

Même si le lithium était décrit en tant qu'agent de neutralisation possible dans l'art antérieur (voir l'ensemble des documents précités), il n'existait aucune divulgation ni enseignement incitant l'homme du métier à mettre en oeuvre ce composé particulier, dans le but de diminuer le taux de polyacrylate mis en oeuvre pour disperser ou broyer dans l'eau une matière minérale.

La caractéristique relative à l'indice de viscosité fait référence aux polymères de poids moléculaires habituels, mis en oeuvre pour disperser ou broyer une matière minérale tel que le carbonate de calcium. La gamme revendiquée correspond, à titre indicatif, à un poids moléculaire compris entre 1 000 g/mol et 15 000 g/mol pour un homopolymère de l'acide acrylique. On privilégie l'indice de viscosité qui est facilement mesurable avec un matériel de laboratoire classique pour des homopolymères et des copolymères de l'acide acrylique. En revanche, la détermination d'un poids moléculaire nécessite des appareils de détection plus sophistiqués et surtout, des étalons qui n'existent parfois pas dans le commerce dans le cas de certains copolymères de l'acide acrylique, en fonction de l'autre monomère.

Aussi, un premier objet de l'invention consiste en l'utilisation dans un procédé de fabrication d'une suspension aqueuse de matière minérale par dispersion et/ou broyage, comme agent dispersant ou d'aide au broyage, d'un homopolymère de l'acide acrylique ou d'un copolymère de l'acide acrylique avec un monomère hydrosoluble, caractérisé en ce que :
a) les groupements carboxyliques dudit agent sont totalement ou partiellement neutralisés par l'ion lithium,
b) il présente un indice de viscosité compris entre 0,01 et 0,08.

Cette utilisation est aussi caractérisé en ce que le pourcentage en mole des groupements carboxyliques neutralisés par l'ion lithium est compris entre 10 % et 100 %, préférentiellement entre 50 % et 100 %, très préférentiellement entre 80 % et 100 %, et en ce que le pourcentage de neutralisation par l'ion lithium le plus préféré est égal à 100%.

Cette utilisation est aussi caractérisée en ce que l'ion lithium servant à neutraliser tout ou partiellement les groupements carboxyliques dudit agent, est apporté sous forme d'hydroxyde de lithium. Bien évidemment, le lithium pourra être apporté par l'intermédiaire de tout autre composé chimique porteur de cet ion.

Cette utilisation est aussi caractérisée en ce que, pour le copolymère de l'acide acrylique avec un autre monomère, cet autre monomère est choisi parmi l'acide méthacrylique, l'anhydride maléique, l'acide acrylamido méthyl propane sulfonique, les esters phosphoriques des méthacrylates d'alkylène glycol, les monomères non ioniques de formule (I) : 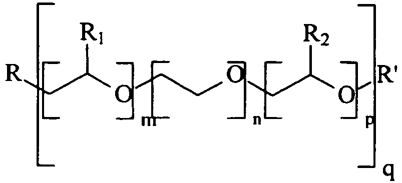 dans laquelle m, n, p et q sont des entiers et m, n, p sont inférieurs à 150, q est supérieur à 0 et au moins un entier parmi m, n et p est non nul, R est un radical comportant une fonction insaturée polymérisable, R₁ et R₂ sont identiques ou différents et représentent des atomes d'hydrogène ou des groupements alkyls, R' représente l'hydrogène ou un radical hydrocarboné ayant 1 à 40 atomes de carbone, ou un groupement ionique ou ionisable.

Cette utilisation est aussi caractérisée, lorsqu'une partie des groupements carboxyliques dudit agent est neutralisée par un autre ion que le lithium, en ce que l'autre ion est choisi parmi le calcium, le magnésium, le sodium, le potassium, l'ammonium et leurs mélanges.

Cette utilisation est aussi caractérisée en ce que ledit agent peut être, avant ou après sa neutralisation totale ou partielle, être traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Cette utilisation est aussi caractérisée en ce que ledit agent peut être obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ladite suspension aqueuse, après dispersion et/ou broyage, présente des viscosités Brookfield™ initiale et après 8 jours de stockage, mesurées à 25°C, à 100 tours / minute et après 1 minute d'agitation, inférieures à 4 000 mPa.s, préférentiellement 2 000 mPa.s, très préférentiellement 500 mPa.s.

Cette utilisation est aussi caractérisée en ce que ladite suspension aqueuse, après dispersion et/ou broyage, présente un extrait sec exprimée en pourcentage en poids sec de matières minérales par rapport à son poids total, compris entre 10 % et 82 %, préférentiellement entre 50 % et 81 %, très préférentiellement entre 65 % et 72 %.

Cette utilisation est aussi caractérisée en ce que ladite suspension aqueuse présente une teneur en poids sec dudit agent, par rapport au poids sec total de matières minérales, comprise entre 0,001 % et 5,000 %, préférentiellement entre 0,001 % et 2,000 %, et très préférentiellement entre 0,05 % et 1,00 %.

Dans une variante particulière, cette utilisation est aussi caractérisée en ce que le procédé de fabrication d'une suspension aqueuse de matière minérale par dispersion et/ou broyage, est un procédé comportant une première étape de broyage sans agent dispersant à une concentration en poids sec de matières minérales comprise entre 10 % et 35 % du poids total de la suspension, et une deuxième étape de dispersion en présence dudit agent, à une concentration en poids sec de matières minérales comprise entre 65 % et 72 % du poids total de la suspension.

Cette utilisation est aussi caractérisée en ce que les matières minérales sont choisies parmi le carbonate de calcium naturel, synthétique, le talc, le kaolin, et leurs mélanges, préférentiellement parmi le carbonate de calcium naturel, synthétique et leurs mélanges.

### EXEMPLES

Dans tous les exemples, les indices de viscosité des polymères, notés η, sont déterminés de la manière suivante.

La forme acide du composé dont il faut déterminer l'indice de viscosité est neutralisée à 100 % par la soude puis diluée à 50 g/l dans de l'eau bipermutée.

Cette solution mère, qui a alors une concentration notée c₀, subit les dilutions suivantes : 2/3 c₀, 1/2 c₀, 1/3 c₀, 1/4 c₀, 1/6 c₀, 1/12 c₀, 1/18 c₀, 1/24 c₀, 1/36 c₀.

On détermine alors pour chaque solution, à 25°C et à pression atmosphérique, la viscosité spécifique à l'aide d'un viscosimètre SCHOTT AVS/500 muni d'un tube de Ubbelohde de référence 53010/I et de constante 0,01 et on trace la courbe viscosité spécifique en fonction de la concentration.

La partie linéaire de la courbe permet d'obtenir l'indice de viscosité : il s'agit de la limite de la viscosité spécifique lorsque la concentration tend vers zéro.

Toutes les répartitions granulométriques ainsi que les diamètres indiqués sont déterminés avec un appareil Sedigraph™ 5100, commercialisé par la société MICROMERITICS™.

### Exemple 1

Cet exemple décrit la préparation de matières minérales qui seront par la suite dispersées ou broyées avec des polymères de l'invention ou de l'art antérieur.

### Essai n° 1

Cet essai concerne la préparation d'un carbonate de calcium précipité de type scalénohédral, ayant une valeur de d₅₀ de 2,3 µm.

Pour ce faire, 200 kg d'oxyde de calcium sont introduits dans 1700 litres d'eau à 40°C dans un réacteur maintenu sous agitation pendant 30 minutes. La suspension résultante présente un extrait sec de 13,3 % en poids sec d'hydroxyde de calcium par rapport à son poids total ; elle est ensuite tamisée à travers un tamis de 100 µm.

La précipitation est réalisée dans un réacteur cylindrique en acier de 1800 litres équipé d'un agitateur, ainsi que de moyens de contrôle du pH et de la conductivité. 1 700 litres de la suspension précédente sont introduits dans le réacteur, la température étant fixée à 50°C.

On fait alors buller vers le haut du réacteur un gaz (teneur en CO₂ comprise entre 20 et 30 % en volume), à un débit de 200 m³/h, sous une agitation comprise entre 200 et 300 tours /minute, la surpression de gaz étant comprise entre 150 et 200 mbar, ce qui correspond à la pression hydrostatique de la suspension d'hydroxyde de calcium dans le réacteur.

Pendant la carbonatation, la température et la pression ne sont pas contrôlées, et peuvent augmenter, notamment à cause du caractère exothermique de la réaction de précipitation.

Lorsque la conductivité atteint une valeur minimale, le débit de gaz est maintenu pendant 4 minutes, puis coupé.

Le produit alors obtenu est filtré sur un tamis de 45 µm, et récupéré sous forme d'une suspension dont l'extrait sec est de 17,4 % en poids sec de carbonate de calcium précipité, par rapport à son poids total.

On obtient des particules de carbonate de calcium précipité dont les polymorphes sont des calcite scalenohèdres, de d₅₀ égal à 2,3 µm, et de surface spécifique mesurée selon la méthode BET égale à 6,3 m²/g.

L'eau de la suspension est séchée par évaporation, de manière à obtenir un solide dont la teneur en matière sèche est supérieure à 99,5 % de son poids total. Ce minéral est appelé minéral 1.

### Essai n° 2

Cet essai concerne la préparation d'un carbonate de calcium naturel qui est un marbre d'origine norvégienne, à partir de rocs d'un diamètre compris entre 10 et 300 mm, et qui sont broyés de manière autogène jusqu'à obtenir un d₅₀ de 45 µm.
La matière minérale obtenue est appelée minéral 2.

### Essai n° 3

Cet essai concerne la préparation d'un carbonate de calcium naturel qui est un marbre d'origine norvégienne, avec un d₅₀ de 0,8 µm.

Le minéral 2 est broyé en milieu aqueux à une concentration égale à 20 % en poids sec de carbonate de calcium par rapport au poids total de ladite suspension, dans un broyeur par attrition vertical de type Dynomill, en mode recirculation, sans agent dispersant ni d'aide au broyage. Le broyage est maintenu jusqu'à obtenir un degré de finesse tel que 60 % en poids des particules ont un diamètre moyen inférieur à 1 µm. A l'issue du broyage, les particules présentent un d₅₀ de 0,8 µm.

Après broyage, la suspension est concentrée dans un tube-presse pour former un gâteau de filtration dont l'extrait sec est compris entre 80 et 83 % de leurs poids total.
La matière minérale obtenue est appelée minéral 3.

### Essai n° 4

Cet essai concerne la préparation de deux carbonates de calcium naturel qui sont des marbres d'origine norvégienne, avec un d₅₀ de 0,6 µm.

Le minéral 2 est broyé en milieu aqueux à une concentration comprise entre 15 % et 25 % en poids sec de carbonate de calcium par rapport au poids total de ladite suspension, dans un broyeur par attrition vertical de type Dynomill, en mode recirculation, sans agent dispersant ni d'aide au broyage. Le broyage est maintenu jusqu'à obtenir un degré de finesse tel que 75 % en poids des particules ont un diamètre moyen inférieur à 1 µm. A l'issue du broyage, les particules présentent un d₅₀ de 0,6 µm.

Après broyage, la suspension obtenue est concentrée dans un filtre-presse de manière à obtenir un cake dont l'extrait sec est égal à 69,5 % de son poids total.
La matière minérale obtenue est appelée minéral 4.

### Essai n° 5

Cet essai concerne la préparation de deux carbonates de calcium naturel qui sont des marbres d'origine norvégienne, avec un d₅₀ de 0,4 µm.

Le minéral 2 est broyé en milieu aqueux à une concentration égale à 20 % en poids sec de carbonate de calcium par rapport au poids total de ladite suspension, dans un broyeur par attrition vertical de type Dynomill, en mode recirculation, sans agent dispersant ni d'aide au broyage. Le broyage est maintenu jusqu'à obtenir un degré de finesse tel que 85 % en poids des particules ont un diamètre moyen inférieur à 1 µm. A l'issue du broyage, les particules présentent un d₅₀ de 0,4 µm.

Après broyage, la suspension obtenue est concentrée dans un tube-presse de manière à obtenir un cake dont l'extrait sec est compris entre 78 % et 80 % de son poids total.
La matière minérale obtenue est appelée minéral 5.

### Exemple 2

Cet essai concerne la mise en oeuvre d'homopolymères et de copolymères de l'acide acrylique selon l'art antérieur et selon l'invention, pour disperser le carbonate de calcium naturel appelé minéral 4, en vue d'obtenir un extrait sec donné (ES en % en poids sec de matière minérale par rapport au poids total de la suspension).

Pour ce faire, on introduit ledit carbonate de calcium et le polymère dans un mélangeur du type Pendraulik, à une vitesse d'environ 3 000 tours / minute pendant 5 à 10 minutes.

Les notations et les grandeurs mesurées sont identiques à celles décrites dans l'exemple précédent. Les résultats apparaissent dans le tableau 1.

**Tableau 1**

| Essai n° | η | neutralisation | ES (%) | dose (%) | µ _{100 t0} (mPa.s) | µ _{100 t8} (mPa.s) |
|---|---|---|---|---|---|---|
| 2-1 AA | 0,01 | Na / Mg (50 / 50) | 55.4 | 1.05 | 1130 | > 3000 |
| 2-2 AA | 0,04 | K (100) | 67.8 | 0.88 | > 4000 | > 4000 |
| 2-3 AA | 0,04 | Na (100) | 66.8 | 0.73 | > 4000 | > 4000 |
| 2-4 AA | 0,07 | Na (100) | 67.5 | 0.50 | > 4000 | > 4000 |
| 2-5 AA | 0,07 | Na (100) | 67.5 | 0.89 | > 4000 | > 4000 |
| 2-6 AA | 0,07 | Na (100) | 67,5 | 1,77 | > 4000 | > 4000 |
| 2-7* AA | 0,075 | Na (100) | 67,2 | 0,49 | 121 | > 500 |
| 2-8 IN | 0,01 | Li (100) | 61,6 | 0,40 | 64 | < 200 |
| 2-9 IN | 0,04 | Li (100) | 66,2 | 0,14 | 85 | < 200 |
| 2-10 IN | 0,04 | Li (100) | 66,2 | 0,16 | 56 | < 200 |
| 2-11 IN | 0,04 | Li (100) | 66,2 | 0,29 | 64 | < 200 |
| 2-12 IN | 0,04 | Li (100) | 69,5 | 0,13 | 570 | 850 |
| 2-13 IN | 0,04 | Li (100) | 69,5 | 0,17 | 69 | < 200 |
| 2-14 IN | 0,04 | Li (85) | 64,0 | 0,15 | 1400 | < 2000 |
| 2-15 IN | 0,04 | Li (85) | 64,0 | 0,23 | 74 | < 200 |
| 2-16 IN | 0,04 | Li / K (50 / 50) | 68,1 | 0,25 | 71 | < 200 |
| 2-17 IN | 0,04 | Li / Na (85 / 15) | 63,2 | 0,21 | 52 | < 200 |
| 2-18 IN | 0,04 | Li / Mg (50 / 50) | 69,3 | 0,77 | 410 | < 2000 |
| 2-19 IN | 0,04 | Li / Mg / K (25 / 50 / 25) | 66,1 | 0,80 | 1660 | < 4000 |
| 2-20 IN | 0,04 | Li / Na (93 / 7) | 64,6 | 0,16 | 60 | < 200 |
| 2-21 * IN | 0,075 | Na / Li (50 / 50) | 67,2 | 0,25 | 70 | < 200 |

| | | | | | | |
|---|---|---|---|---|---|---|
| * copolymère de l'acide acrylique et de l'anhydride maléique (50 % / 50 % en poids) | | | | | | |

Ces résultats démontrent que les polymères selon l'invention permettent, à des taux inférieurs à ceux pratiqués pour l'art antérieur, d'obtenir un extrait sec et une stabilité de la viscosité au moins équivalente à ceux obtenus pour l'art antérieur.

### Exemple 3

Cet essai concerne la mise en oeuvre d'homopolymères de l'acide acrylique selon l'art antérieur et selon l'invention, pour disperser le carbonate de calcium naturel appelé minéral 3, en vue d'obtenir un extrait sec donné (ES en % en poids sec de matière minérale par rapport au poids total de la suspension).

Pour ce faire, on introduit ledit carbonate de calcium et le polymère dans un mélangeur du type Pendraulik, à une vitesse d'environ 3 000 tours / minute pendant 5 à 10 minutes.

Les notations et les grandeurs mesurées sont identiques à celles décrites dans l'exemple précédent. Les résultats apparaissent dans le tableau 2.

**Tableau 2**

| Essai n° | Mw | Neutralisation | ES (%) | dose (%) | µ _{100 t0} (mPa.s) | µ _{100 t8} (mPa.s) |
|---|---|---|---|---|---|---|
| 3-1 AA | 0,04 | Na (100) | 72,1 | 2,00 | > 4000 | > 4000 |
| 3-2 IN | 0,07 | Li (100) | 72,1 | 0,24 | 81 | < 200 |

Ces résultats démontrent que les polymères selon l'invention permettent, à des taux inférieurs à ceux pratiqués pour l'art antérieur, d'obtenir un extrait sec et une stabilité de la viscosité au moins équivalente à ceux obtenus pour l'art antérieur.

### Exemple 4

Cet essai concerne la mise en oeuvre d'homopolymères et de copolymères de l'acide acrylique selon l'art antérieur et selon l'invention, pour disperser le carbonate de calcium naturel appelé minéral 5, en vue d'obtenir un extrait sec donné (ES en % en poids sec de matière minérale par rapport au poids total de la suspension).

Pour ce faire, on introduit ledit carbonate de calcium et le polymère dans un mélangeur du type Pendraulik, à une vitesse d'environ 3 000 tours / minute pendant 5 à 10 minutes.

Les notations et les grandeurs mesurées sont identiques à celles décrites dans l'exemple précédent. Les résultats apparaissent dans le tableau 3.

**Tableau 3**

| Essai n° | Mw | Neutralisation | ES (%) | dose (%) | µ _{100 t0} (mPa.s) | µ _{100 t8} (mPa.s) |
|---|---|---|---|---|---|---|
| 4-1 AA | 0,04 | Na (100) | 65,0 | 2,00 | > 4000 | ** |
| 4-2 IN | 0,04 | Li (100) | 72,1 | 0,24 | 81 | < 200 |

| | | | | | | |
|---|---|---|---|---|---|---|
| ** trop visqueux pour être mesurée | | | | | | |

Ces résultats démontrent que les polymères selon l'invention permettent, à des taux inférieurs à ceux pratiqués pour l'art antérieur, d'obtenir un extrait sec et une stabilité de la viscosité au moins équivalente à ceux obtenus pour l'art antérieur.

### Exemple 5

Cet essai concerne la mise en oeuvre d'homopolymères de l'acide acrylique selon l'art antérieur et selon l'invention, pour broyer le carbonate de calcium appelé minéral 2.

Pour ce faire, on broyé dans un broyeur vertical de type Dynomill en mode recirculation le minéral 1, jusqu'à obtenir un degré de finesse tel que 50 % en poids des particules ont un diamètre moyen inférieur à 0,7 µm.

Les résultats apparaissent dans le tableau 4.

On a mesuré en plus le % en poids des particules, dont le diamètre moyen est inférieur à 0,2 µm, 1 µm et 2 µm, notés respectivement %<0,2µm %<1µm et %<2µm.

**Tableau 4**

| Essai n° | Mw | Neutralisation | ES (%) | dose (%) | µ _{100 t0} (mPa.s) | µ _{100 t8} (mPa.s) | %<0,2µm %<1µm %<2µm |
|---|---|---|---|---|---|---|---|
| 5-1 AA | 0,04 | Na (100) | 78,0 | 0,7 | - | - | - |
| 5-2 IN | 0,04 | Li (100) | 78,1 | 0,58 | 149 | 200 | 16 |
| | | | | | | | 64 |
| | | | | | | | 92 |

| | | | | | | | |
|---|---|---|---|---|---|---|---|
| ** trop visqueux pour être mesurée | | | | | | | |

Ces résultats démontrent que les polymères selon l'invention permettent, à des taux inférieurs à ceux pratiqués pour l'art antérieur, d'obtenir un extrait sec et une stabilité de la viscosité au moins équivalents à ceux obtenus pour l'art antérieur.

### Exemple 6

Cet exemple illustre la mise en oeuvre d'homopolymères de l'acide acrylique selon l'invention et selon l'art antérieur, pour broyer puis disperser un carbonate de calcium précipité qui est le minéral 1.

Pour ce faire, on introduit ledit carbonate de calcium et le polymère dans un mélangeur du type Pendraulik, à une vitesse d'environ 3 000 tours / minute pendant 5 à 10 minutes. On mesure les mêmes grandeurs qu'auparavant.

Les résultats apparaissent dans le tableau 5.

**Tableau 5**

| Essai n° | Mw | Neutralisation | ES (%) | dose (%) | µ _{100 t0} (mPa.s) | µ _{100 t8} (mPa.s) |
|---|---|---|---|---|---|---|
| 6-1 AA | 0,04 | Na / Mg (50 / 50) | 60,1 | 1,5 | > 4000 | > 4000 |
| 6-2 IN | 0,04 | Li (100) | 59,7 | 0,74 | 120 | < 200 |

Ces résultats démontrent bien la supériorité des polymères selon la présente invention.

## Revendications

1. Utilisation dans un procédé de fabrication d'une suspension aqueuse de matière minérale par dispersion et/ou broyage, comme agent dispersant ou d'aide au broyage, d'un homopolymère de l'acide acrylique ou d'un copolymère de l'acide acrylique avec un monomère hydrosoluble, **caractérisé en ce que** :
a) les groupements carboxyliques dudit agent sont totalement ou partiellement neutralisés par l'ion lithium,
b) il présente un indice de viscosité compris entre 0,01 et 0,08.

2. Utilisation selon la revendication 1, **caractérisée en ce que** le pourcentage en mole des groupements carboxyliques neutralisés par l'ion lithium est compris entre 10 % et 100 %, préférentiellement entre 50 % et 100 %, très préférentiellement entre 80 % et 100 %, et **en ce que** le pourcentage de neutralisation par l'ion lithium le plus préféré est égal à 100 %.

3. Utilisation selon l'une des revendications 1 ou 2, **caractérisée en ce que** l'ion lithium servant à neutraliser tout ou partiellement les groupements carboxyliques dudit agent, est apporté sous forme d'hydroxyde de lithium.

4. Utilisation selon l'une des revendications 1 à 3, **caractérisée en ce que**, pour le copolymère de l'acide acrylique avec un autre monomère, cet autre monomère est choisi parmi l'acide méthacrylique, l'anhydride maléique, l'acide acrylamido méthyl propane sulfonique, les esters phosphoriques des méthacrylates d'alkylène glycol, les monomères non ioniques de formule (I) : 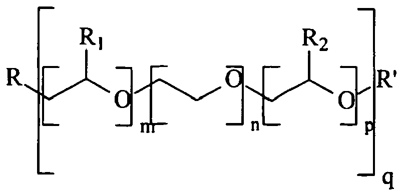 dans laquelle m, n, p et q sont des entiers et m, n, p sont inférieurs à 150, q est supérieur à 0 et au moins un entier parmi m, n et p est non nul, R est un radical comportant une fonction insaturée polymérisable, R₁ et R₂ sont identiques ou différents et représentent des atomes d'hydrogène ou des groupements alkyls, R' représente l'hydrogène ou un radical hydrocarboné ayant 1 à 40 atomes de carbone, ou un groupement ionique ou ionisable.

5. Utilisation selon l'une des revendications 1 à 4, caractérisée, lorsqu'une partie des groupements carboxyliques dudit agent est neutralisée par un autre ion que le lithium, en ce que l'autre ion est choisi parmi le calcium, le magnésium, le sodium, le potassium, l'ammonium et leurs mélanges.

6. Utilisation selon l'une des revendications 1 à 5, **caractérisée en ce que** ledit agent peut être, avant ou après sa neutralisation totale ou partielle, être traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

7. Utilisation selon l'une des revendications 1 à 6, **caractérisée en ce que** ledit agent peut être obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

8. Utilisation selon l'une des revendications 1 à 7, **caractérisée en ce que** ladite suspension aqueuse, après dispersion et/ou broyage, présente des viscosités Brookfield™ initiale et après 8 jours de stockage, mesurées à 25 °C, à 100 tours / minute et après 1 minute d'agitation, inférieures à 4 000 mPa.s, préférentiellement 2 000 mPa.s, très préférentiellement 500 mPa.s.

9. Utilisation selon l'une des revendications 1 à 8, **caractérisée en ce que** ladite suspension aqueuse, après dispersion et/ou broyage, présente un extrait sec exprimée en pourcentage en poids sec de matières minérales par rapport à son poids total, compris entre 10 % et 82 %, préférentiellement entre 50 % et 81 %, très préférentiellement entre 65 % et 72 %.

10. Utilisation selon l'une des revendications 1 à 9, **caractérisée en ce que** ladite suspension aqueuse présente une teneur en poids sec dudit agent, par rapport au poids sec total de matières minérales, comprise entre 0,001 % et 5,000 %, préférentiellement entre 0,001 % et 2,000 %, et très préférentiellement entre 0,05 % et 1,00 %.

11. Utilisation selon l'une des revendications 1 à 10, **caractérisée en ce que** le procédé de fabrication d'une suspension aqueuse de matière minérale par dispersion et/ou broyage, est un procédé comportant une première étape de broyage sans agent dispersant à une concentration en poids sec de matières minérales comprise entre 10 % et 35 % du poids total de la suspension, et une deuxième étape de dispersion en présence dudit agent, à une concentration en poids sec de matières minérales comprise entre 65 % et 72 % du poids total de la suspension.

12. Utilisation selon l'une des revendications 1 à 11, **caractérisée en ce que** la matière minérale est choisie parmi le carbonate de calcium naturel, synthétique, le talc, le kaolin, et leurs mélanges, préférentiellement parmi le carbonate de calcium naturel, synthétique et leurs mélanges.

## Patentansprüche

1. Verwendung eines Homopolymers von Acrylsäure oder eines Copolymers von Acrylsäure mit einem wasserlöslichen Monomer als Dispergier- oder Mahlhilfsmittel in einem Verfahren zur Herstellung einer wässrigen Mineralstoffsuspension durch Dispersion und/oder Zerkleinerung, **dadurch gekennzeichnet, dass**
a) die Carbonsäuregruppen des Mittels vollständig oder teilweise durch das Lithiumion neutralisiert sind,
b) es einen Viskositätsindex im Bereich von 0,01 bis 0,08 aufweist.

2. Verwendung nach Anspruch 1, **dadurch gekennzeichnet, dass** der Molprozentanteil an Carbonsäuregruppen, die durch das Lithiumion neutralisiert sind, im Bereich von 10 % bis 100 %, vorzugsweise von 50 % bis 100 %, mit starkem Vorzug von 80 % bis 100 %, liegt, und dadurch, dass der am stärksten bevorzugte Prozentanteil der Neutralisierung durch das Lithiumion 100 % beträgt.

3. Verwendung nach einem der Ansprüche 1 oder 2, **dadurch gekennzeichnet, dass** das Lithiumion, welches dazu dient, die Carbonsäuregruppen des Mittels vollständig oder teilweise zu neutralisieren, in Form von Lithiumhydroxid zugeführt wird.

4. Verwendung nach einem der Ansprüche 1 bis 3, **dadurch gekennzeichnet, dass** bezüglich des Copolymers von Acrylsäure mit einem weiteren Monomer dieses weitere Monomer aus Methacrylsäure, Maleinsäureanhydrid, Acrylamidomethylpropansulfonsäure, den Phosphorsäurestern von Alkylglykolmethacrylaten ausgewählt ist sowie aus den nichtionischen Monomeren der Formel (I): 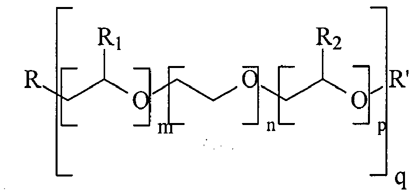 wobei m, n, p und q ganze Zahlen sind und m, n, p kleiner als 150 sind, q größer als 0 ist und mindestens eine der ganzen Zahlen m, n und p ungleich null ist, R ein Rest ist, der eine polymerisierbare ungesättigte funktionelle Gruppe aufweist, R₁ und R₂ gleichartig oder verschiedenartig sind und für Wasserstoffatome oder Alkylgruppen stehen, R' für Wasserstoff oder einen Kohlenwasserstoffrest mit 1 bis 40 Kohlenstoffatomen oder eine ionische oder ionisierbare Gruppe steht.

5. Verwendung nach einem der Ansprüche 1 bis 4, **dadurch gekennzeichnet, dass**, wenn ein Teil der Carbonsäuregruppen des Mittels durch ein anderes Ion als Lithium neutralisiert ist, dieses andere Ion aus Calcium, Magnesium, Natrium, Kalium, Ammonium und deren Mischungen ausgewählt ist.

6. Verwendung nach einem der Ansprüche 1 bis 5, **dadurch gekennzeichnet, dass** das Mittel, vor oder nach seiner vollständigen oder teilweisen Neutralisierung, behandelt und in mehrere Phasen aufgetrennt werden kann, und zwar gemäß statischen oder dynamischen Verfahren mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht.

7. Verwendung nach einem der Ansprüche 1 oder 6, **dadurch gekennzeichnet, dass** das Mittel durch Verfahren der radikalischen Polymerisation in Lösung, in direkter oder umgekehrter Emulsion, in Suspension oder mit Fällungsvorgang in Lösungsmitteln, in Gegenwert von katalytischen Systemen und Kettenübertragungsmitteln erhalten werden kann, oder auch durch Verfahren der kontrollierten radikalischen Polymerisation und vorzugsweise durch eine Polymerisation, welche mittels Nitroxiden (NMP) oder mittels Cobaloximen kontrolliert wird, eine radikalische Polymerisation unter Atomtransfer (ATRP), eine radikalische Polymerisation, welche mittels schwefelhaltiger Verbindungen kontrolliert wird, die aus den Carbamaten, den Dithioestern oder den Trithiocarbonaten (RAFT) oder den Xanthogenaten ausgewählt sind.

8. Verwendung nach einem der Ansprüche 1 bis 7, **dadurch gekennzeichnet, dass** die wässrige Suspension, nach der Dispersion und/oder Zerkleinerung, Brookfield™-Viskositäten aufweist, die zu Beginn und nach 8-tägiger Lagerung geringer als 4.000 mPa.s, vorzugsweise 2.000 mPa.s, mit starkem Vorzug 500 mPa.s sind, wobei die Messung bei 25 °C, bei 100 Umdrehungen/Minute und nach einer Rührdauer von 1 Minute erfolgt.

9. Verwendung nach einem der Ansprüche 1 bis 8, **dadurch gekennzeichnet, dass** die wässrige Suspension, nach der Dispersion und/oder Zerkleinerung, einen Trockenextrakt aufweist, der im Bereich von 10 % bis 82 %, vorzugsweise von 50 % bis 81 %, mit starkem Vorzug von 65 % bis 72 %, liegt, ausgedrückt als Trockengewichtsprozentanteil der Mineralstoffe an ihrem Gesamtgewicht.

10. Verwendung nach einem der Ansprüche 1 bis 9, **dadurch gekennzeichnet, dass** die wässrige Suspension einen Trockengewichtsgehalt an dem Mittel aufweist, der bezogen auf das Gesamttrockengewicht an Mineralstoffen im Bereich von 0,001 % bis 5,000 %, vorzugsweise von 0,001 % bis 2,000 %, mit starkem Vorzug von 0,05 % bis 1,00 %, liegt.

11. Verwendung nach einem der Ansprüche 1 bis 10, **dadurch gekennzeichnet, dass** es sich bei dem Verfahren zur Herstellung einer wässrigen Mineralstoffsuspension durch Dispersion und/oder Zerkleinerung um ein Verfahren handelt, das einen ersten Schritt des Zerkleinerns ohne Dispergiermittel, wobei die Trockengewichtskonzentration an Mineralstoffen im Bereich von 10 % bis 35 % des Gesamtgewichts der Suspension liegt, und einen zweiten Schritt der Dispersion in Gegenwart des Mittels, wobei die Trockengewichtskonzentration an Mineralstoffen im Bereich von 65 % bis 72 % des Gesamtgewichts der Suspension liegt, aufweist.

12. Verwendung nach einem der Ansprüche 1 bis 11, **dadurch gekennzeichnet, dass** der Mineralstoff aus natürlichem oder synthetischem Calciumcarbonat, Talkum, Kaolin und deren Mischungen, vorzugsweise aus natürlichem oder synthetischem Calciumcarbonat oder deren Mischungen, ausgewählt ist.

## Claims

1. A use of a homopolymer of acrylic acid or a copolymer of acrylic acid with a watersoluble monomer, as a dispersing agent or grinding aid agent in a method for manufacturing an aqueous suspension of mineral material through dispersion and/or grinding, **characterized in that**:
a) the carboxylic groups of said agent are fully or partially neutralized by the lithium ion,
b) it exhibits a viscosity index of between 0.01 and 0.08.

2. A use according to claim 1, **characterized in that** the percentage by molar weight of the carboxylic groups neutralized by the lithium ion is between 10% and 100%, preferably between 50% and 100%, very preferably between 80% and 100%, and **in that** the percentage of neutralization by the most preferred lithium ion is equal to 100%.

3. A use according to one of the claims 1 or 2, **characterized in that** the lithium ion used to fully or partially neutralize said agent's carboxylic groups, is provided in the form of lithium hydroxide.

4. A use according to one of the claims 1 to 3, **characterized in that**, for the copolymer of acrylic acid with another monomer, this other monomer is chosen from among methacrylic acid, maleic anhydride, acrylamido-methylpropane sulfonic acid, phosporic esters of glycol alkylene methacrylates, and non-ionic monomers with the formula (I): 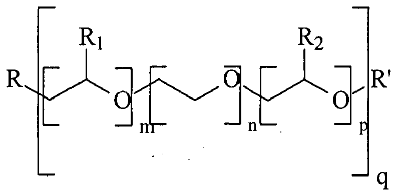 wherein m, n, p and q are whole numbers and m, n, and p are less than 150, q is greater than 0, and at least one whole number among m, n, and p is non-zero, R is a radical comprising a polymerizable unsaturated function, R₁ and R₂ are identical or different and represent hydrogen atoms or alkyl groups, R' represents hydrogen or a hydrocarbonated radical having 1 to 40 carbon atoms, or an ionic or ionizable group.

5. A use according to one of the claims 1 to 4, characterized, whenever a portion of the carboxylic groups of said agent is neutralized by a different ion than lithium, in that the other ion is chosen from among calcium, magnesium, sodium, potassium, ammonium, and mixtures thereof.

6. A use according to one of the claims 1 to 5, **characterized in that** the said agent may be, before or after its total or partial neutralization reaction, treated and separated into several phases, according to static or dynamic processes, by one or more polar solvents preferably belonging to the group constituted by water, methanol, ethanol, propanol, isopropanol, the butanols, acetone, tetrahydrofuran or mixtures thereof.

7. A use according to one of the claims 1 to 6, **characterized in that** said agent is obtained by processes of radical polymerization in solution, in a direct or inverse emulsion, in suspension or precipitation in solvents, in the presence of catalytic systems and chain transfer agents, or by processes of controlled radical polymerization, and preferably by nitroxide mediated polymerization (NMP) or by cobaloximes, by atom transfer radical polymerization (ATRP), by radical polymerization controlled by sulphurated derivatives, chosen from among carbamates, dithioesters or trithiocarbonates (RAFT) or xanthates.

8. A use according to one of the claims 1 to 7, **characterized in that** said aqueous suspension, after dispersion and/or grinding, exhibits an initial Brookfield™ viscosity, and one after 8 days of storage, measured at 25°C, at 100 revolutions per minute and after 1 minute of agitation, both less than 4,000 mPa.s, preferably 2,000 mPa.s, and most preferably 500 mPa.s.

9. A use according to one of the claims 1 to 8, **characterized in that** said aqueous suspension, after dispersion and/or grinding, exhibits a solids content expressed as a percentage by dry weight of mineral materials in relation to its total weight, of between 10% and 82%, preferably between 50% and 81 %, and most preferably between 65% and 72%.

10. A use according to one of the claims 1 to 9, **characterized in that** said aqueous suspension exhibits a content of said agent by dry weight, in relation to the total dry weight of mineral materials, of between 0.001% and 5.000%, preferably between 0.001% and 2.000%, and most preferably between 0.05% and 1.00%.

11. A use according to one of the claims 1 to 10, **characterized in that** said method of manufacturing an aqueous suspension of mineral materials through dispersion and/or grinding is a method comprising a first step of grinding without a dispersing agent at a concentration by dry weight of mineral materials of between 10% and 35% of the suspension's total weight, and a second step of dispersion in the presence of said agent, at a concentration by dry weight of mineral materials of between 65% and 72% of the total weight of the suspension.

12. A use according to one of the claims 1 to 11, **characterized in that** the mineral material is chosen from among natural and synthetic calcium carbonate, talc, kaolin, and mixtures thereof, and preferably from among natural and synthetic calcium carbonate and mixtures thereof.
